# EUROPEAN PATENT APPLICATION

(11) **EP 1 110 613 A1**
(43) Date of publication of application: **27.06.2001**
(21) Application number: 00121657.1
(22) Date of filing: 04.10.2000
(51) Int. Cl.: B01L 3/02

(54) **Improved pipette tray**

(30) Priority: 23.12.1999 US 171601 P
(71) Applicant: Mikron Plastics Technology, 2560 Nidau (DE)
(72) Inventor: Bagnoud, Grégoire, 3255 Rapperswill (CH); Weber, Andreas, 2512 Tüscherz-Alfermée (CH); Oeing-Hanhoff, Bernhard, 2502 Biel (CH); Schiegg, Beat, 3377 Walliswill (CH)
(74) Representative: Balsters, Robert

(57) **Abstract**

Pipette tray (13) for pipette tips (11) each having an upper portion (11a) integrally formed with and joined to a lower tip portion (11b), both portions lying along a common vertical axis. The tray (13) comprises a plurality of holes (16) for receiving said pipette tips (11), each hole having an input aperture (16a), an output aperture (16b), and a sidewall (17) connecting said apertures (16a, 16b).

According to the invention, the input aperture (16a) is arranged to frictionally engage with the upper portion (11a) of a pipette tip to define a first reference point (R1) at the place of engagement. The output aperture (16b) is arranged to engage with the lower portion (11b) to define a second reference point (R2) at the place of engagement. The input and output apertures (16a, 16b) are vertically aligned coaxially so that said pipette tips (11) can be supported in a vertical position in said tray (13) and releasably held therein by interference fits at least at said input aperture (16a).

## Description

The present invention relates to an improved pipette tray allowing for a more precise alignment of pipette tips with respect to a well plate in a multi-channel pipettor system. A multi-channel pipettor may have n x 96 channels, n being, e.g., 1, 4 or 16. Such pipettors are used in laboratory technology and concern multi-tubular pipettes, which can be used for instance for dispensing liquids simultaneously into a well plate in the form of an array of sample vessels arranged in a row so as to allow for screening.

In the field of laboratory disposable, the High Throughput Screening (HTS) segment requires instruments that are able to speed up the screening process. The way the instrument manufacturers are choosing to achieve this requirement is to analyse more samples at the same time.

The usual pipettors for High Throughput Screening generally have 96 channels, arranged, e.g., in a matrix of 8 rows and 12 columns, and are able to handle 96-well plates in a single step or 384 / 1536-well plates in 4 / 16 steps. One must take into account that steps are time consuming and thus reduce the power of the process. For this reason, some equipment manufacturers have developed a new generation of pipettors with 384 channels. For example, the US patent 5,970,806 describes such a pipettor. This kind of instrument is able to handle a 384-well plate in a single step. The challenge with this kind of instrument is to be able to control the behaviour of a high number of channels.

In fact, multi-channel pipettors systems comprise a plurality of channels or pipette-tips, into which liquid is sucked and from which it is simultaneously removed. The sets of cylinders in currently used multi-channel pipettes are made in one piece by injection moulding from plastic.

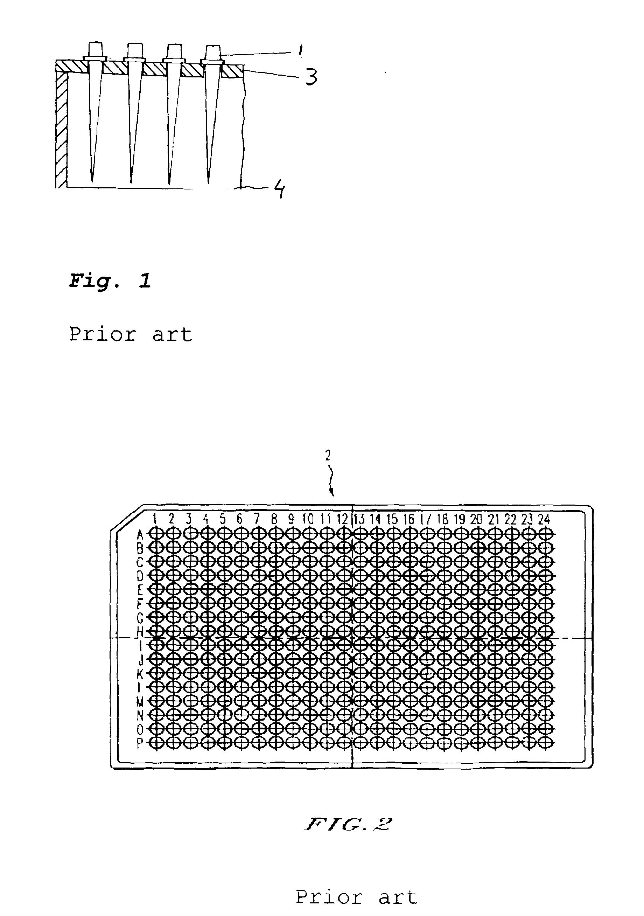

Pipette-tips for pipettors up to 96 channels are common on the market and available from a large number of suppliers such as Greiner, Treff, Biohit etc. The pipette tips are made of PP (polypropylene) material, produced by injection moulding with moulds up to 64 impressions or more, then placed vertically on trays containing 96 holes, inserted into the holes and packed into plastic boxes for storage and shipping. Figure 1 shows an example of a conventional box 4 containing a pipette tray 3 in which pipette-tips 1 are arranged. Each tray is about 1 to 1.5 mm thick and ensures a certain positioning of the tips relative to each other, so that they may be correctly aligned when placed over a well plate. The trays have exactly the same dimensions as the well plates so that the tips are already correctly positioned to be easily mounted onto the pipettor. To fix the tips onto the pipettor, the uncovered box is placed underneath the pipettor which is then pushed with a strong force into the pipette-tips. In general, the pipettor has a pipettor head provided with 96 cones, which are thus inserted into the tips to allow for extraction of the tips from the tray. The box and the tray are then removed and the tips hang on the pipettor. The screening work can start. An example of a conventional pipette tray is show in the document US-A-5 948 362.

The design and technology used for the 96-channel pipettors are sufficient to fulfil the co-centricity requirements, i.e. alignment of the tips with respect to the wells on the well plate.

However, as may be understood, when increasing the number of channels from 96 to, e.g. 384 of 1536, the pipette tips requirements for 384 / 1536 channels pipettors will change.

The outer dimensions of a 384- or of a 1536-well plate are the same as those of a 96-well plate. On a 384/1536 well plate, the holes are thus 4 / 16 times smaller than on a 96-well plate. It may thus be understood that the pipette tips used for a 96 channel pipettor are not suitable for a 384 / 1536 channel pipettor and this for the following reasons:
- The diameter of the pipette tip is too big to fit onto the pipettor
- The requirements on co-centricity are naturally much higher for a 384 / 1536 channels pipettor.

The diameter and the tip size of the pipette tip are problems for which solutions already partly exist, at least for 384 channel pipettors. The challenge today is to find a solution that guarantees the co-centricity of the system pipette tips-pipettor. The problem with the co-centricity is of two kinds
- Co-centricity deviation due to the injection moulding process.
- Co-centricity deviation due to the fixation on the pipettor.

The co-centricity deviation due to the injection moulding process is a matter of the mould concept. Presently, even the specialists in the field of mould injection have problems to get it right.

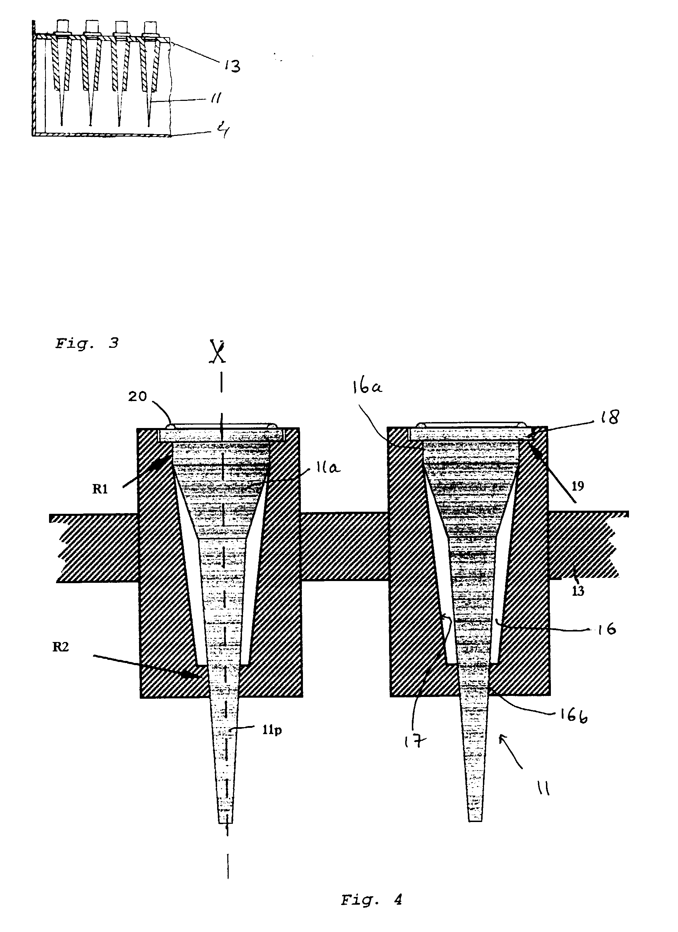

For the co-centricity deviation due to the fixation on the pipettor there does not appear to be any satisfying solution. Presently, the tips are pushed into the pipettor with a strong force to achieve a sealing and tightness. To improve the co-centricity, the instrument manufacturers use different angles between the pipettor head and the tips, but this is not sufficient to ensure that all pipette-tips (96, 384 or 1536) are aligned correctly. Also, the ends of the tips must further be arranged on the same plane, i.e. aligned in the planar direction so that the tip ends are all spaced the same distance from the wells containing the liquid. Clearly, the prior art arrangement cannot sufficiently ensure such alignments. Figure 2 shows an example of a current 384-channel well plate, referenced by numeral 2.

The reason why companies have done little work in finding a solution is that the market for 384 well plates is relatively new and still small.

It is therefore an object of the present invention to provide an improved pipette tray which overcomes the above mentioned problems related to alignment of the tips with respect to the well plate. Furthermore, such tray and pipette-tips should also ensure a correct sealing with the pipettor.

Thus, the present invention concerns a pipette tray as defined in the appended claims.

Thanks to the features of this pipette tray, correct alignment can be assured, while at the same time retaining the fabrication costs of the tray-tip assembly low.

Another advantage of the present invention is that a simple and highly reliable sealing of the system tray-tips-pipettor can be obtained.

Other features and advantages of the pipette tray according to the present invention will become clear from reading the following description, which is given solely by way of a non-limitative example thereby referring to the attached drawings in which:
FIGURE 1 is a schematic cross-section of a conventional pipette tray with tips inserted,
FIGURE 2 is a top view of a conventional 384-channel well plate,
FIGURE 3 is a schematic cross-section of a pipette tray with tips inserted, according to a first preferred embodiment of the present invention,
FIGURE 4 is a detailed view of the schematic cross-section of figure 3 of a pipette tray with tips inserted,
FIGURE 5 shows a first example of the mounting of the pipette tip/ tray assembly onto a conventional pipettor head,
FIGURE 6 shows a first example of a sealing plate for mounting the pipettor tray and tips according to the present invention onto a conventional pipettor head provided with cones,
FIGURE 7 shows a second example of a sealing plate for mounting the pipettor tray and tips according to the present invention onto a modified pipettor head without cones, and
FIGURE 8 shows a further preferred embodiment in which the tray-tip assembly is one integrated part.

A first preferred embodiment of the present invention is shown in Figures 3 and 4 which show a package design "Tray / Tip" for the solution of the co-centricity problem and illustrates the principle of the solution according to the present invention of the co-centricity problem. The shown tray-tip assembly may be arranged in a matrix manner as is usual in state of the art devices, but of course such arrangement is merely an example. The tips could also be arranged in another manner such as, e.g. a beehive arrangement.

As shown, tray 13 according to the present invention has co-centric holes 16 with long sidewalls 17 in which the tips 11 are frictionally inserted. Each pipette tip 11 has an upper, hollow, tapered, generally cylindrical barrel portion 11a integrally formed with and joined to a lower, hollow, elongated tapering tip portion 11b, both portions lying along a common vertical axis X (see Figure 4). The proximal end of the lower portion llb of each tip 11 extends beyond the side walls 17, according to the usual industry standards imposed by the well plates, for a length of, e.g., about 11 mm for a 384 channel tray, and about 7 mm for a 1536 channel tray. It may be understood that the length may differ depending on the actual requirements. In general, this length should be as short as possible so as to ensure optimal precision of the co-axial alignment of the tips. The tray is made of hard plastic, such as polystyrene, ABS or SAN, and fulfils the following functions:
- Correct the co-centricity deviation of the tip due to injection moulding process
- Avoid a co-centricity deviation during the insertion of the tips in the pipettor because all tips are frictionally fixed in the tray.

As shown in the figure, the upper portion lla of a tip 11 may have an axial collar which allows for the frictional insertion of the tip into the accommodating hole 16 of the tray 13.

With this solution, tray 13 need not be removed after the fixation of the tips 11 to the pipettor head, because, as the tips are frictionally inserted under pressure into the tray, the tray will be lifted with the tips and will thus further fulfil its co-centricity function until the tips are removed from the pipettor after disposal of their fluid.

As shown in more detail in figure 4, tray 13 comprises a plurality of holes 16 for receiving pipette tips 11. Tray 13 is of a substantially planar shape having a top surface and a bottom surface which may be provided with reinforcement ribs. Each hole 16 has two coaxially aligned apertures, i.e. an input aperture 16a and an output aperture 16b, and a sidewall 17 connecting the apertures to form the hole. As shown, both apertures 16a, 16b may extend beyond the top and bottom surface respectively of tray 13. Preferably, input aperture 16a is provided with an abutment shoulder 19 within the hole for supporting a tip. The tip then has a corresponding supporting flange 18, which rests on the abutment shoulder 19, when tip 11 is inserted into hole 16.

The input aperture 16a is arranged so as to frictionally engage with the distal, wider, ends of an upper portion lla of a pipette tip 11 so as to define a first reference point, referenced R1, at the place of engagement, i.e. corresponding to input aperture 16a. In a similar manner, output aperture 16b is arranged to engage with the proximal, narrower, end of a lower portion llb of a pipette tip 11 so as to define a second reference point, referenced R2, at the place of engagement, i.e. corresponding to output aperture 16b. As mentioned above, pipette tip 11 may extend beyond output aperture 16b when inserted in hole 16 and the tip then contacts the hole at both reference points R1 and R2. As may be understood, these reference points R1 and R2 thus ensure a correct coaxial vertical alignment of the tip with respect to the tray, and thus also with respect to a well-plate. Thanks to this arrangement, the pipette tips can be supported in a vertical, precisely defined position in the tray and may be releasably held therein by interference fits at least at the input aperture.

As can be seen in the figure, on the top surface of the upper part lla of the tip, sealing projections 20 may be provided. The role of such projections will be explained further on.

Furthermore, the present arrangement allows for an easy connection to a pipettor head. Indeed, the tray may be positioned with respect to the pipettor in two simple steps. First of all, a course alignment is carried out, e.g., by positioning the tray with respect to the pipettor head by its geometry, i.e. by its outer dimensions. Next, a fine alignment is carried out by an exact positioning of the head with respect to the tray. To this effect, the pipettor head may be provided with at least one positioning axle depending from the head so as to be inserted into a corresponding positioning cavity provided in the tray. This may be done in any suitable way as is known to a skilled person and thus will not be explained in detail here.

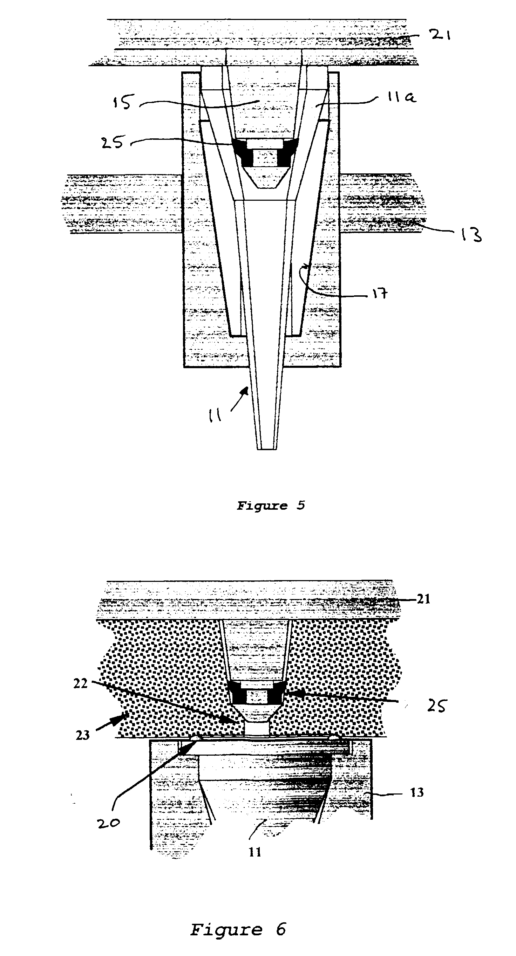

Figure 5 shows a first example of the mounting of the pipette tip / tray assembly onto a conventional pipettor head. Pipettor head 21 has cones 15 depending therefrom for receiving the pipette tip. In this arrangement, tip 11 is directly mounted onto cone 15. To ensure sealing, cone 15 has a gasket 25 surrounding its exterior surface that will be in contact with the inner surface of tip 11. Thanks to a slight play due to the cone/gasket/tip assembly, the tip will be correctly aligned in the axial direction as it is forced into its correct position by reference points R1 and R2.

To improve sealing, a suitable adapter may further be provided allowing for correct mounting and unmounting of the tray-tip assembly onto the pipettor head.

Indeed, the present applicant has conceived two different adapters, a first allowing the mounting to a conventional pipettor head provided with cones for receiving the tips, and a second for mounting the tips onto a modified pipettor head, as will be explained hereafter.

The tray and tips need to be correctly mounted onto the pipettor thereby not only ensuring correct alignment, but also ensuring a perfect fit such that there is a complete sealing between the pipettor head and the tips so as to avoid any (gas-) leakage. Thus, to this effect, a sealing plate may be provided between the tray and the pipettor head.

Figure 6 shows a first example of a sealing plate 23 for mounting the tray and tip system according to the present invention onto a conventional pipettor head 21 provided with cones 15 (only one cone being shown in the figure), similar to head 21 of figure 5. Instead of mounting the tips 11 onto the cones 15, as is the case for the conventional pipettor systems and as shown in figure 5, the sealing plate is inserted between the top surface of the tray and the bottom surface of the pipettor head. This sealing plate may be a soft plate, made of e.g. silicon rubber or elastomer or the like, and which is thicker than the length of the cone. In fact, sealing plate 23 should be thick enough to ensure sealing between the top surface of the tray and the bottom surface of pipettor head 21. In practice, this sealing plate may be around 17 mm thick.

As mentioned hereabove, sealing projections 20 may be provided on the top surface of the upper portion 11a of a tip. Such projections allow for a lower pressure sealing, i.e. if such projections are provided, the pressure that must be applied between on the sealing plate to the tips to ensure correct sealing is lower than if such projections were not provided.

Sealing plate 23 is provided with a plurality of air channels 22 which are arranged in this sealing plate such that there is one air channel 22 per pipette tip. Each air channel 22 is to be aligned above the top portion 11a of a tip 11 and below cone 15 of the pipettor head 21.

Advantageously, a gasket ring 25 is provided around cone 15, thus being positioned between cone 15 and sealing plate 23 so as to ensure a perfect sealing of the pipette tip assembly on pipettor head 21.

In an alternative arrangement, not shown, and in view of the fact that the inventive tray/tip assembly may be used for 384 or even 1536-channel arrangement, the tips then being much narrower than in a conventional 96-channel arrangement, the tips may be inserted into the cones, instead of the usual other way round, to allow for the assembly onto the pipettor head. In such a case, a gasket ring may be provided around the tips to ensure gas-tightness, i.e. air or any surrounding gas in the environment of the pipettor head, between the tips and the cones.

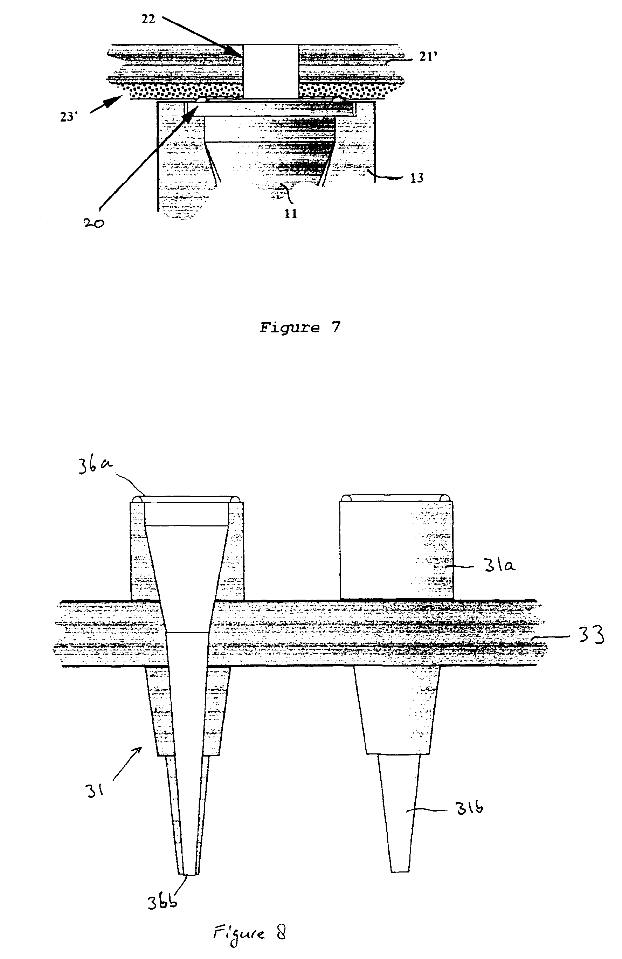

Figure 7 shows a second example of a sealing plate. This sealing plate, referenced 23', is similar to the sealing plate 23 of the first example shown in figure 6, but is much thinner than sealing plate 23 and may be, e.g. several millimetres thick. Clearly, this thickness depends on the flexibility of the sealing plate material and the possible presence of the sealing projections 20, which will contact and deform the sealing plate.

However, this sealing plate 23' requires a modification of the pipettor head. Indeed, the bottom surface of the pipettor head should be planar, i.e. there should not be any cones protruding therefrom. In this case, the sealing plate is thus placed directly between tray 13 and the bottom surface of pipettor head 21' to ensure sealing. As already mentioned, this sealing is important to prevent the ambient gas, such as air, being sucked in.

In the case that the pipettor head does not have cones extending into the tips, it may of course be understood that suitable tray holding means should be provided to ensure a correct holding of the tips in the tray and to the head so as to avoid the tray falling away from the head.

From the above, it may be understood that the innovation of the preferred embodiment described above, lies in the fact that by modifying the tray design, it is possible to give the tray - besides its packing function - the function of ensuring the co-centricity of the complete tips-tray system.

In an alternative embodiment, which applies the same inventive principle as described above, the tray-tip assembly may be realised as one moulded integrated part. Figure 8 shows the integration of the tips geometry into the tray geometry to form one single part.

In this embodiment, the integrated pipette tray 33 with pipette tips 31, is arranged such that tray 33 is a substantially planar plate, preferably provided with reinforcement ribs for improved rigidity of the plate, having defined therein a plurality of holes 36 forming part of pipette tips 31. In an manner analogue to the embodiment described here above, the holes each have an input aperture 36a, an output aperture 36b, and a sidewall 37 connecting both apertures so as to constitute tip 31. Hence, in this embodiment the sidewalls of the hole are in fact the sidewalls of the tip.

Thus, tips 31 are integrally formed with tray 33. Thanks to new moulding technologies like the Tool-Vac Process - presently under development at AGA GAS - it is possible to improve the part-cooling after injection moulding and this makes it possible to mould the tray with integrated tips geometry in either a 1-shot or a 2-shot moulding process (see Figure 4). The integrated tray / tip assembly solves in this case the co-centricity problem in exactly the same way as above but with the following further advantages:
- No need to mould tips but only one big tray-part with an integrated tips geometry
- No handling needed to put the moulded tips into the tray
- Important saving of manufacturing costs

As may be readily understood, a suitable adapter as described above may also further be provided allowing for easier mounting / unmounting of the tips on the pipettor with or without a sealing plate.

The proposed solution thus allows for a new tray design, with tips that are fixed in the tray and the tray - through its design - which will correct all co-centricity deviations of the system.

The solution may be applied to, e.g., the ranges of 96, 384 and 1536 pipettor systems.

Having described a preferred embodiment of this invention, it will now be apparent to one of skill in the art that other embodiments incorporating its concept may be used. It is felt, therefore, that this invention should not be limited to the disclosed embodiment, but rather should be limited only by the scope of the appended claims.

## Claims

1. Pipette tray (13) for pipette tips (11) each having an upper, hollow, tapered, generally cylindrical barrel portion (11a) integrally formed with and joined to a lower, hollow, elongated tapering tip portion (11b), both portions lying along a common vertical axis,
said pipette tray (13) having defined therein a plurality of holes (16) for receiving said pipette tips (11), said holes each having an input aperture (16a), an output aperture (16b), and a sidewall (17) connecting said apertures (16a, 16b), characterised in that
said input aperture (16a) is arranged to frictionally engage with the distal, wider, ends of a said upper portion (11a) of a said pipette tip so as to define a first reference point (R1) at the place of engagement, and said output aperture (16b) is arranged to engage with the proximal, narrower, end of a said lower portion (11b) of a said pipette tip so as to define a second reference point (R2) at the place of engagement, said pipette tip (11) extending beyond said output aperture (16b) when inserted in said hole (16) and contacting said hole at said first and said second reference points (R1 and R2), said input and output apertures (16a, 16b) being vertically aligned coaxially so that said pipette tips (11) can be supported in a vertical position in said tray (13) and releasably held therein by interference fits at least at said input aperture (16a).

2. Integrated pipette tray (33) with pipette tips (31), wherein said tips each have an upper, hollow, tapered, generally cylindrical barrel portion (31a) integrally formed with and joined to a lower, hollow, elongated tapering tip portion (31b), both portions lying along a common vertical axis, characterised in that
said pipette tray (33) has defined therein a plurality of holes (36) forming part of said pipette tips (31), said holes each having an input aperture (36a), an output aperture (36b), and a sidewall (37) connecting said apertures (36a, 36b) so as to constitute the tip,
said input aperture (36a) constitutes the opening of a distal, wider, end of an upper portion (31a) of a said pipette tip thereby defining a first reference point (R1), and said output aperture (36b) constitutes the opening of a proximal, narrower, end of a lower portion (31b) of a said pipette tip thereby defining a second reference point (R2), said input and output apertures (36a, 36b) being vertically aligned coaxially so that said pipette tips (31) are supported in a vertical position in said tray (33).

3. Pipette tray package comprising a pipette tray (13, 33) according to claim 1 or 2, and further comprising a sealing plate (23, 23') provided with a plurality of air channels (22) aligned above and with said input apertures (16a, 36a) of said tray (13, 33).

4. Pipettor system comprising:
- a pipettor having a pipettor head (21, 21') with a plurality of pipette tips depending therefrom, and
- a pipette tray package according to claim 3, said pipette tray package being arranged such that the pipette tips (11, 31) are contained within the holes (16, 36) of said tray (13, 33) and are aligned with the air channels (22) of said sealing plate (23, 23'), and the sealing plate (23, 23') being arranged between the pipettor head and said tray (13, 33) so as to ensure a gas-sealing between the tips (11, 31) and the pipettor head (21).

5. Pipettor system according to claim 4,
wherein said pipettor head (21) has a plurality of cones (15) for receiving said tips (11, 31), said cones being inserted into said tips (11, 31) so that said tips depend from said cones (15), said sealing plate (23) being arranged such that its air channels (22) are aligned with outputs of said cones (15).

6. Pipettor system according to claim 5, further comprising a plurality of gasket rings (25), each arranged around each of said cones (15) to ensure a gas-tightness between the cones and said sealing plate (23).

7. Pipettor system according to claim 4,
wherein said pipettor head (21) has a plurality of cones (15) for connecting to said tips (11, 31), said tips (11, 31) being inserted into said cones (15) so that said tips depend from said cones (15), said sealing plate (23) being arranged such that its air channels (22) are aligned with outputs of said cones (15).

8. Pipettor system according to claim 7, further comprising a plurality of gasket rings (25), each arranged around each of said tips (11, 31) to ensure a gas-tightness between the tips and cones.

9. Pipettor system according to claim 4, wherein said pipettor head (21') has a planar bottom surface, and said sealing plate (23') is arranged directly between said bottom surface and said tray (13).
